# EUROPEAN PATENT APPLICATION

(11) **EP 4 838 488 A1**
(43) Date of publication of application: **11.11.2026**
(21) Application number: 25736440.6
(22) Date of filing: 06.01.2025
(51) Int. Cl.: G06V 20/56

(54) **OBJECT SEARCHING METHOD, SELF-MOVING DEVICE, COMPUTER STORAGE MEDIUM AND ELECTRONIC DEVICE**

(30) Priority: 05.01.2024 CN 202410024179
(71) Applicant: Beijing Roborock Technology Co., Ltd., Beijing 102206 (CN)
(72) Inventor: LI, Yuxuan, Beijing 102206 (CN); SONG, Jian, Beijing 102206 (CN)
(74) Representative: Maiwald GmbH
(86) International application number: PCT/CN2025/070790
(87) International publication number: WO 2025/146201

(57) **Abstract**

The present disclosure relates to the technical field of smart home. Provided are an object searching method, a self-moving device, a computer storage medium and an electronic device. The object searching method is applied to the self-moving device, and the self-moving device is provided with an image acquisition device. The method comprises: after an object searching instruction is received, by means of the image acquisition device, collecting a field-of-view image of the self-moving device during a movement process, the object searching instruction comprising feature description information of a target object to be searched; on the basis of the feature description information, detecting whether the field-of-view image contains the target object, so as to obtain an object detection result; and, on the basis of the object detection result, determining an object searching result for the target object. The object searching method in the present disclosure can overcome the limitation that only objects having signal transmitting capabilities can be searched in the related art.

## Description

### CROSS-REFERENCE TO RELATED APPLICATION

The present disclosure claims priority to Chinese Patent Application No. 202410024179.8, filed on January 5, 2024 and entitled "OBJECT SEARCH METHOD, SELF-MOBILE DEVICE, COMPUTER STORAGE MEDIUM AND ELECTRONIC DEVICE", the content of which is incorporated herein by reference in its entirety.

### TECHNICAL FIELD

The present disclosure relates to the technical field of smart homes, and in particular, to an object search method, a self-mobile device, a computer storage medium, and an electronic device.

### BACKGROUND ART

With the rapid development of smart home technologies, self-mobile devices are bringing convenience to more and more homes.

In the related art, some self-mobile devices feature an automatic return-to-dock function. However, the self-mobile device can only search for a charging dock based on a signal transmitted by the charging dock, and once the signal is not received, the above automatic return-to-dock function cannot be realized.

In view of this, there is an urgent need in the art to develop a new object search method.

It should be noted that the information disclosed in the above background section is only used to enhance the understanding of the background of the present disclosure.

### SUMMARY OF THE INVENTION

An objective of the present disclosure is to provide an object search method, a self-mobile device, a computer storage medium, and an electronic device, so as to overcome, at least to some extent, the technical problem of only searching for an object capable of transmitting a signal due to the limitations in the related art.

Other features and advantages of the present disclosure will become apparent from the following detailed description, or may be learned in part through the practice of the present disclosure.

According to a first aspect of the present disclosure, an object search method is provided. The object search method is applicable to a self-mobile device. The self-mobile device is provided with an image capturing device, and the method includes:
capturing, by the image capturing device, a field-of-view image of the self-mobile device during movement after an object search instruction is received, the object search instruction including feature description information of a target object to be searched; and
detecting whether the field-of-view image includes the target object based on the feature description information to obtain an object detection result, and determining an object search result for the target object based on the object detection result.

In the exemplary embodiments of the present disclosure, capturing, by the image capturing device, the field-of-view image of the self-mobile device during movement after the object search instruction is received includes:
determining, after the object search instruction is received, an initial sub-region to be searched from a current scene; and
capturing, by the image capturing device, an initial field-of-view image of the self-mobile device during movement in the initial sub-region to be searched.

In the exemplary embodiments of the present disclosure, determining the initial sub-region to be searched from the current scene includes:
determining an initial position of the self-mobile device in the current scene; and
determining a circular region with the initial position as a center of a circle and a preset distance length as a radius as the initial sub-region to be searched.

In the exemplary embodiments of the present disclosure, determining the initial sub-region to be searched from the current scene includes:
determining a key search region from the current scene, a search priority corresponding to the key search region being higher than that of other regions in the current scene, and the search priority being configured to represent a sequence in which the self-mobile device searches for the target object in different regions of the current scene; and
moving from a current position to the key search region, and determining the initial sub-region to be searched in the key search region.

In the exemplary embodiments of the present disclosure, determining the initial sub-region to be searched in the key search region includes:
determining an initial position of the self-mobile device in the key search region; and
determining a circular region with the initial position as a center of a circle and a preset distance length as a radius as the initial sub-region to be searched.

In the exemplary embodiments of the present disclosure, capturing, by the image capturing device, the initial field-of-view image of the self-mobile device during movement in the initial sub-region to be searched includes:
rotating by a preset angle in the initial sub-region to be searched with the initial position as a rotation center; and
capturing, by the image capturing device, an initial field-of-view image of the self-mobile device during rotation in the initial sub-region to be searched.

In the exemplary embodiments of the present disclosure, determining the key search region from the current scene includes:
detecting whether the object search instruction includes a specified search region for the target object; and
determining, in the case that the object search instruction includes the specified search region, the specified search region as the key search region.

In the exemplary embodiments of the present disclosure, the method further includes:
retrieving, in the case that the object search instruction does not include the specified search region, a historical search record based on the feature description information to obtain a historical appearance region of the target object; and
determining the historical appearance region as the key search region,
where the historical search record is configured to store a mapping relationship between feature description information of a historical search object and a search result thereof, and the search result includes a historical appearance region of the historical search object.

In the exemplary embodiments of the present disclosure, after moving from the current position to the key search region, the method further includes:
controlling a capture frequency of the image capturing device to increase from a first frequency to a second frequency.

In the exemplary embodiments of the present disclosure, after capturing, by the image capturing device, the initial field-of-view image of the self-mobile device during movement in the initial sub-region to be searched, the method further includes:
marking the initial sub-region to be searched as an initial searched sub-region.

In the exemplary embodiments of the present disclosure, detecting whether the field-of-view image includes the target object based on the feature description information to obtain the object detection result includes:
detecting whether the initial field-of-view image includes the target object based on the feature description information to obtain an initial object detection result.

In the exemplary embodiments of the present disclosure, after obtaining the initial object detection result, determining the object search result for the target object based on the object detection result includes:
marking, in the case that the initial object detection result indicates that the initial field-of-view image includes the target object, the initial searched sub-region as an appearance region of the target object in a pre-created scene map; and
outputting the marked appearance region and/or the initial field-of-view image as the object search result for the target object.

In the exemplary embodiments of the present disclosure, after marking the initial searched sub-region as the appearance region of the target object in the pre-created scene map, the method further includes:
recapturing the initial field-of-view image in the initial searched sub-region; and
determining the marked appearance region and/or the recaptured initial field-of-view image as the object search result for the target object.

In the exemplary embodiments of the present disclosure, after obtaining the initial object detection result, determining the object search result for the target object based on the object detection result includes:
determining, in the case that the initial object detection result indicates that the initial field-of-view image does not include the target object, a next sub-region to be searched;
capturing, by the image capturing device, a next field-of-view image of the self-mobile device during movement in the next sub-region to be searched;
detecting whether the next field-of-view image includes the target object based on the feature description information to obtain a next object detection result; and
determining the object search result for the target object based on the next object detection result.

In the exemplary embodiments of the present disclosure, determining the next sub-region to be searched includes:
determining the next sub-region to be searched based on a preset sub-region determining strategy,
where the preset sub-region determining strategy includes: a distance between a central position of the next sub-region to be searched and the initial position being less than a preset distance threshold, and an overlapping area between the next sub-region to be searched and the initial searched sub-region being less than a preset area threshold.

In the exemplary embodiments of the present disclosure, after determining the next sub-region to be searched, the method further includes:
determining a central position of the next sub-region to be searched; and
moving from the initial position to the central position of the next sub-region to be searched.

In the exemplary embodiments of the present disclosure, after determining the object search result for the target object based on the object detection result, the method further includes:
pushing the object search result to an application and/or a user terminal corresponding to the self-mobile device.

In the exemplary embodiments of the present disclosure, the target object includes a charging dock, and the object search result includes an appearance region of the charging dock; and
after the object search result is pushed to the application and/or the user terminal corresponding to the self-mobile device, the method further includes:
proceeding to the appearance region corresponding to the charging dock for charging.

In the exemplary embodiments of the present disclosure, the object search instruction includes the following forms:
a control instruction issued by an application of the self-mobile device;
a voice control instruction; and
a control signal transmitted by a remote control device of the self-mobile device,
where the remote control device includes a Bluetooth remote control device, an infrared remote control device, and a radio frequency remote control device.

In the exemplary embodiments of the present disclosure, the target object includes one or more objects; and
when the target object includes a plurality of objects, types of any two of the plurality of objects are the same or different.

According to a second aspect of the present disclosure, a self-mobile device is provided. The self-mobile device is provided with an image capturing device, and the self-mobile device includes:
an image capturing module, configured to capture, by the image capturing device, a field-of-view image of the self-mobile device during movement after an object search instruction is received, the object search instruction including feature description information of a target object to be searched; and
an object search module, configured to detect whether the field-of-view image includes the target object based on the feature description information to obtain an object detection result, and determine an object search result for the target object based on the object detection result.

According to a third aspect of the present disclosure, a computer storage medium having a computer program stored thereon is provided. The computer program, when run by a processor, causes the processor to perform the object search method according to the above first aspect.

According to a fourth aspect of the present disclosure, an electronic device is provided. The electronic device includes: a processor; and a memory, configured to store executable instructions of the processor, where the processor is configured to perform the object search method according to the above first aspect by executing the executable instructions.

According to the above technical solutions, the object search method, the self-mobile device, the computer storage medium, and the electronic device in the exemplary embodiments of the present disclosure at least have the following advantages and positive effects.

In the technical solutions provided by some embodiments of the present disclosure, after an object search instruction (the object search instruction including the feature description information of a target object to be searched) is received, a field-of-view image of a self-mobile device during movement is captured by an image capturing device; and whether the field-of-view image includes the target object is detected based on the feature description information to obtain an object detection result, and an object search result for the target object is determined based on the object detection result. In one aspect, the limitation in the related art where only an object with signal transmission capabilities can be identified is overcome, the type and range of the target object that can be searched for are expanded, and the breadth of object search coverage is enhanced. In another aspect, the object search result can be quickly output by capturing an image and performing image detection based on the feature description information, which not only avoids the time and labor costs caused by manually searching for the target object and reduces the burden of manual search, but also can accurately identify the target object by means of the feature description information, thereby reducing the possibility of misidentification and improving the accuracy of the object search result.

It should be understood that, in the present disclosure, both the foregoing general description and the following detailed description are exemplary and explanatory only and are not construed as limiting the present disclosure.

### BRIEF DESCRIPTION OF THE DRAWINGS

The drawings, which are incorporated into and constitute a part of the specification, illustrate embodiments consistent with the present disclosure and are used in conjunction with the specification to explain the principles of the present disclosure. Apparently, the drawings in the following description show merely some embodiments of the present disclosure, and those of ordinary skill in the art may still derive other drawings from these drawings without creative efforts.
FIG. 1 shows a schematic flowchart of an object search method according to one embodiment of the present disclosure;
FIG. 2 shows a schematic flowchart of how to capture a field-of-view image of a self-mobile device during movement by an image capturing device according to one embodiment of the present disclosure;
FIG. 3 shows a schematic diagram of how to determine an initial sub-region to be searched according to one embodiment of the present disclosure;
FIG. 4 shows a schematic flowchart of how to determine a key search region according to one embodiment of the present disclosure;
FIG. 5 shows a schematic flowchart of how to determine an object search result based on an initial object detection result when the initial object detection result indicates that an initial field-of-view image includes a target object according to one embodiment of the present disclosure;
FIG. 6 shows a schematic flowchart of how to determine an object search result based on an initial object detection result when the initial object detection result indicates that an initial field-of-view image does not include a target object according to one embodiment of the present disclosure;
FIG. 7 shows a schematic diagram of how to determine a next sub-region to be searched according to one embodiment of the present disclosure;
FIG. 8 shows a schematic flowchart of how a self-mobile device moves to a next sub-region to be searched according to one embodiment of the present disclosure;
FIG. 9 shows a schematic structural diagram of a self-mobile device according to one exemplary embodiment of the present disclosure; and
FIG. 10 shows a schematic structural diagram of an electronic device according to one exemplary embodiment of the present disclosure.

### DETAILED DESCRIPTION

Exemplary embodiments will now be described more comprehensively with reference to the drawings. However, the exemplary embodiments may be implemented in various forms, and should not be understood as being limited to the examples described herein. On the contrary, these embodiments are provided to make the present disclosure more comprehensive and complete, and comprehensively convey the idea of the exemplary embodiments to a person skilled in the art. The described features, structures, or characteristics may be combined in one or more embodiments in any suitable manner. In the following description, many specific details are provided to give a full understanding of the embodiments of the present disclosure. However, those skilled in the art will recognize that the technical solutions of the present disclosure may be practiced without one or more of the specific details, or other methods, components, apparatuses, steps, or the like may be employed. In other instances, well-known technical solutions are not shown or described in detail to avoid obscuring aspects of the present disclosure.

In this specification, the terms "a", "an", "the", and "said" are used to indicate the presence of one or more elements/components/etc.; the terms "include" and "have" are used to indicate open-ended inclusion and mean that there may be additional elements/components/etc. in addition to the listed elements/components/etc.; and the terms "first" and "second" are used only as labels, and are not intended to limit the number of objects thereof.

In addition, the drawings are only schematic illustrations of the present disclosure and are not necessarily drawn to scale. The same reference numerals in the drawings indicate the same or similar parts, and thus, repeated description thereof will be omitted. Some of the block diagrams shown in the drawings are functional entities, which are not necessarily required to correspond to physically or logically independent entities.

In the related art, when the self-mobile device attempts to return to the dock but cannot receive a dock signal (e.g., an infrared signal or a patten pattern) at a recorded dock coordinate point, the automatic return-to-dock function cannot be realized.

Therefore, the above solution has at least the following defects: the search method is limited, the target object must be capable of transmitting a signal or providing an identification identifier before the search can be performed based on such a signal, the reliance on a dock signal is excessively high, and the limitations are substantial.

In the embodiments of the present disclosure, an object search method is first provided, which overcomes, at least to some extent, the defect in the related art that only an object capable of transmitting a signal can be searched for.

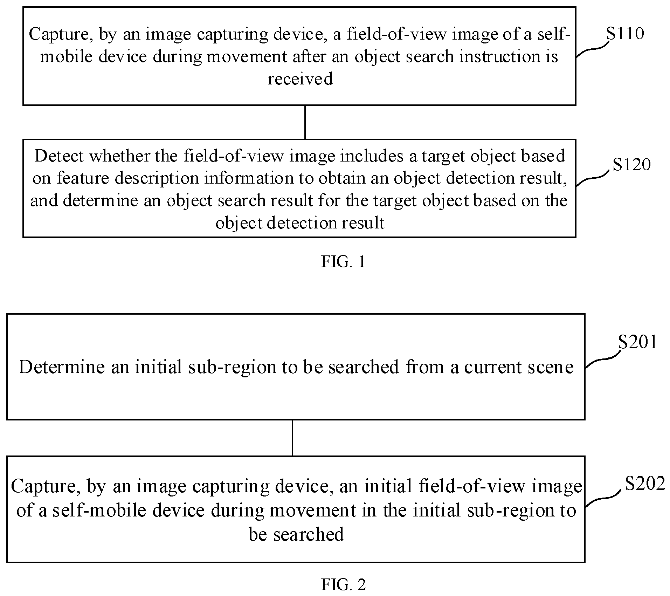

FIG. 1 shows a schematic flowchart of an object search method according to one embodiment of the present disclosure. The object search method may be performed by a self-mobile device.

Referring to FIG. 1, an object search method according to one embodiment of the present disclosure includes the following steps.

In step S110, after an object search instruction is received, a field-of-view image of a self-mobile device during movement is captured by an image capturing device. The object search instruction includes the feature description information of a target object to be searched.

In step S120, whether the field-of-view image includes the target object is detected based on the feature description information to obtain an object detection result, and an object search result for the target object is determined based on the object detection result.

In the technical solutions provided by the embodiments shown in FIG. 1, after an object search instruction (the object search instruction including the feature description information of a target object to be searched) is received, a field-of-view image of a self-mobile device during movement is captured by an image capturing device; and whether the field-of-view image includes the target object is detected based on the feature description information to obtain an object detection result, and an object search result for the target object is determined based on the object detection result. In one aspect, the limitation in the related art where only an object with signal transmission capabilities can be identified is overcome, the type and range of the target object that can be searched for are expanded, and the breadth of object search coverage is enhanced. In another aspect, the object search result can be quickly output by capturing an image and performing image detection based on the feature description information, which not only avoids the time and labor costs caused by manually searching for the target object and reduces the burden of manual search, but also can accurately identify the target object by means of the feature description information, thereby reducing the possibility of misidentification and improving the accuracy of the object search result.

The following describes in detail a specific implementation process of each step in FIG. 1.

Before step S110, it should be noted that the self-mobile device (e.g., a sweeping robot) in the present disclosure is provided with an image capturing device, and the image capturing device serves to capture an image or a video. Illustratively, the image capturing device may be an RGB camera. The RGB camera is a sensor that captures images of multiple colors at high speed, and recognizes and measures the color and brightness of object surfaces. RGB refers to the three colors of red, green, and blue. The increase or decrease of these three colors constitutes multiple colors, so an RGB camera can capture images and videos with very rich colors.

In the present disclosure, the user can control the self-mobile device to search for a specified target object by issuing an object search instruction.

The target object may be one or more objects (e.g., a charging dock, a pet, a stool, a coin, or a remote controller). When the objects include a plurality of objects, the types of any two objects among the plurality of objects are the same or different, such as a charging dock and a pet, and a pet A (a cat) and a pet B (a dog), which can be set based on actual situations. This is not particularly limited in the present disclosure.

The object search instruction may include the feature description information of a target object to be searched. The feature description information may be the name, shape, size, color, high-frequency placement position, and the like of the target object, or may be a picture of the target object or the like, which can be set based on actual situations. This is not particularly limited in the present disclosure. Considering that the feature description information can be flexibly customized, the present disclosure can adapt to requirements of different targets and scenes, such that the solutions embrace a wide range of application prospects.

The object search instruction may include the following forms:
(1) a control instruction issued by an application of a self-mobile device, that is, a user may install the application of the self-mobile device on a mobile phone or other smart devices and generate the control instruction by inputting a text, a picture, or the like by using an operation interface of the application;
(2) a voice control instruction, that is, a user directly issues an instruction through voice; and
(3) a control signal transmitted by a remote control device of a self-mobile device, where the remote control device may be a Bluetooth remote control device, an infrared remote control device, a radio frequency remote control device, or the like, and may be set based on actual situations. This is not particularly limited in the present disclosure.

After the user issues the object search instruction, the self-mobile device may receive the object search instruction, and then step S110 may be performed.

In step S110, after an object search instruction is received, a field-of-view image of a self-mobile device during movement is captured by an image capturing device.

In this step, after the object search instruction is received by the self-mobile device, the field-of-view image of the self-mobile device during movement may be captured by the image capturing device.

Specifically, referring to FIG. 2, FIG. 2 shows a schematic flowchart of how to capture a field-of-view image of a self-mobile device during movement by an image capturing device according to one embodiment of the present disclosure, including steps S201 and S202.

In step S201, an initial sub-region to be searched is determined from a current scene.

In this step, in a first optional embodiment, the self-mobile device may directly determine the initial position of the self-mobile device in the current scene (which may be the real-time position of the self-mobile device at a moment when the object search instruction is received, for example, a position A), and then use the initial position as a starting point for searching for an object and start to search for the target object. Specifically, the self-mobile device may use the initial position as the starting point for searching for an object, determine a circular region with the initial position as the center of a circle and a preset distance length as the radius as an initial sub-region to be searched, and start to search for the target object in the initial sub-region to be searched.

The preset distance length (illustratively, r) may be determined based on the shooting range or the coverage area of the RGB camera. Illustratively, the preset distance length r may be any value within the numerical range of 50 cm to 130 cm, and may be set based on actual situations. This is not particularly limited in the present disclosure.

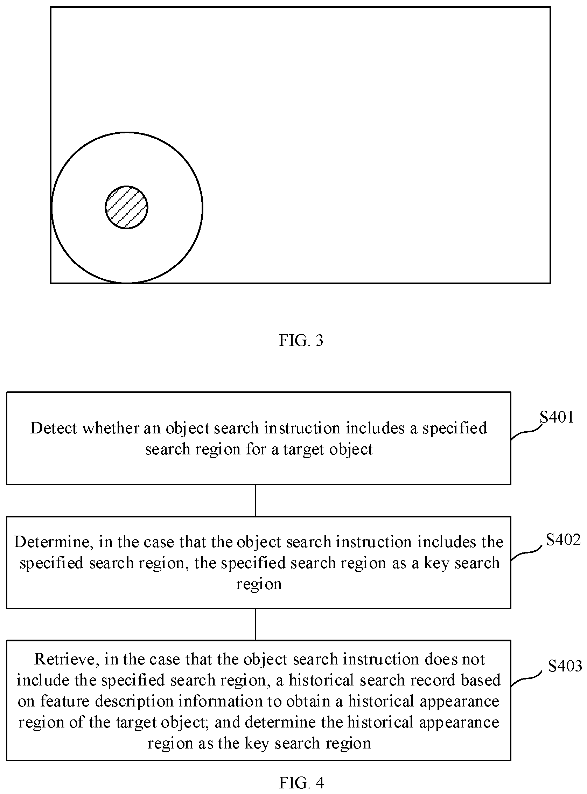

Referring to FIG. 3, FIG. 3 shows a schematic diagram of how to determine an initial sub-region to be searched according to one embodiment of the present disclosure. As shown in FIG. 3, the shaded circle in the figure indicates the initial position of the self-mobile device, and the circular region including the shaded circle is the initial sub-region to be searched.

In a second optional embodiment, a key search region may be first determined from the current scene, then the device moves from the current position into the key search region, and an initial sub-region to be searched is determined in the key search region.

The key search region is a region or range where the target object is most likely to be found. By setting the key search region, the self-mobile device can be instructed to quickly find the target object, thereby saving the search time and improving the object search efficiency. Illustratively, in the present disclosure, a search priority corresponding to the key search region may be set to be higher, and a search priority corresponding to a non-key search region may be set to be lower, such that the self-mobile device may preferentially search for the target object from the key search region. In the case that the target object is not found from the key search region, the self-mobile device may continue to search for the target object in other non-key search regions or terminate the task, and directly generate an object search result.

Referring to FIG. 4, FIG. 4 shows a schematic flowchart of how to determine a key search region according to one embodiment of the present disclosure, including steps S401 to S403.

In step S401, whether the object search instruction includes a specified search region for the target object is detected.

In this step, the self-mobile device may detect whether the object search instruction includes a specified search region for the target object. The specified search region may be a region where the target object is frequently placed or frequently appears.

In step S402, in the case that the object search instruction includes the specified search region, the specified search region is determined as the key search region.

In this step, in the case that it is detected that the object search instruction includes the specified search region, the self-mobile device may directly determine the specified search region as the key search region.

In step S403, in the case that the object search instruction does not include the specified search region, a historical search record is retrieved based on the feature description information to obtain a historical appearance region of the target object, and the historical appearance region is determined as the key search region.

In this step, in the case that it is detected that the object search instruction does not include the specified search region, the self-mobile device may retrieve a historical search record based on the feature description information included in the object search instruction to obtain a historical appearance region of the target object.

The historical search record may be configured to store a mapping relationship between the feature description information of a historical search object and a search result thereof. The search result may include a historical appearance region of the historical search object, and the historical appearance region is a region where the target object has previously appeared or was frequently placed in the past.

It should be noted that assuming that a plurality of historical appearance regions are retrieved from the historical search record, for example, a, b, and c, the self-mobile device may further tally the appearance frequencies corresponding to each historical appearance region, and further determine a search priority of each of the plurality of historical appearance regions based on the appearance frequencies, so as to determine which historical appearance region to go to first to search for the target object based on the search priority, thereby improving the object search efficiency.

After the key search region is determined, the self-mobile device may move from the current position into the key search region, and then the self-mobile device may determine its initial position (for example, a position B) in the key search region. Further, with reference to the related description of step S201, the self-mobile device may use the initial position as the starting point for searching for an object. Specifically, a circular region with the initial position as the center of a circle and a preset distance length as the radius may be determined as an initial sub-region to be searched, and the target object starts to be searched for in the initial sub-region to be searched.

It should be noted that after moving from the current position to the key search region, the capture frequency of the image capturing device may be controlled to increase from a first frequency to a second frequency, or the image resolution of the image capturing device may be controlled to increase from a first resolution to a second resolution, or the self-mobile device may also automatically adjust the number of traversals for each sub-region to be searched to be two or more, so as to focus on searching for the target object in the key search region. The specific implementation may be set based on actual situations, and this is not particularly limited in the present disclosure.

After the initial sub-region to be searched is determined, referring to FIG. 2, in step S202, an initial field-of-view image of the self-mobile device during movement in the initial sub-region to be searched is captured by the image capturing device.

In this step, after the initial sub-region to be searched is determined, the self-mobile device may rotate by a preset angle (the preset angle may be 360 degrees) in the initial sub-region to be searched with the initial position (that is, the position A in the current scene or the position B in the key search region) as the rotation center, and an initial field-of-view image of the self-mobile device during rotation in the initial sub-region to be searched is captured by the image capturing device.

After the initial field-of-view image of the self-mobile device during rotation in the initial sub-region to be searched is captured by the image capturing device, the self-mobile device may mark the initial sub-region to be searched as an initial looked-up sub-region. Based on this, the problem of time-consuming lookup caused by repeated lookup in a certain sub-region can be avoided.

After the initial field-of-view image is obtained, the process may proceed to step S120, in which whether the field-of-view image includes the target object is detected based on the feature description information to obtain an object detection result, and an object search result for the target object is determined based on the object detection result.

In this step, the self-mobile device may detect whether the initial field-of-view image includes the target object based on the feature description information included in the object search instruction to obtain an initial object detection result. Illustratively, a trained object recognition model may be deployed in the self-mobile device in advance, and feature extraction may be performed on the initial field-of-view image based on the object recognition model. Further, the extracted feature may be classified or matched to output an initial object detection result. The initial object detection result may indicate whether the initial field-of-view image includes the target object.

After the initial object detection result is obtained, an object search result for the target object may be determined based on the initial object detection result.

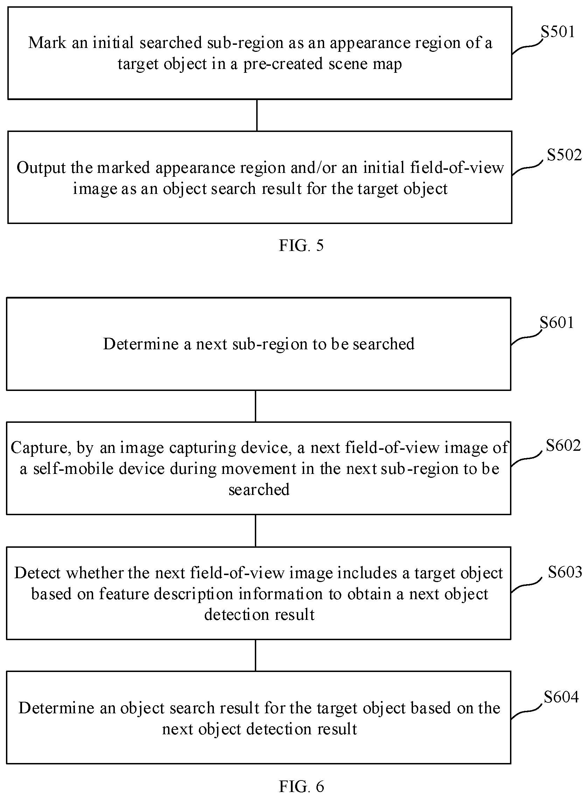

Specifically, in view of the case where the initial object detection result indicates that the initial field-of-view image includes the target object, reference can be made to the processing procedure shown in FIG. 5 to determine the object search result for the target object. In view of the case where the initial object detection result indicates that the initial field-of-view image does not include the target object, reference can be made to the processing procedure shown in FIG. 6 to determine the object search result for the target object.

First, referring to FIG. 5, FIG. 5 shows a schematic flowchart of how to determine an object search result based on an initial object detection result when the initial object detection result indicates that an initial field-of-view image includes a target object according to one embodiment of the present disclosure, including steps S501 and S502.

In step S501, the initial searched sub-region is marked as an appearance region of the target object in a pre-created scene map.

In this step, the initial searched sub-region may be marked as an appearance region of the target object in a pre-created scene map. The scene map may be a map created indoors by the self-mobile device by using a sensor and an algorithm before cleaning, and the map may include information such as an indoor layout and the position of furniture.

In step S502, the marked appearance region and/or the initial field-of-view image are output as the object search result for the target object.

In this step, in one optional embodiment, the marked appearance region and/or the initial field-of-view image may be output as the object search result for the target object.

In another optional embodiment, illustratively, after the appearance region of the target object is marked, the shooting resolution of the RGB camera may be increased. Further, the initial field-of-view image may be re-captured in the initial searched sub-region. Further, the marked appearance region and/or the re-captured initial field-of-view image are determined as the object search result for the target object.

Next, referring to FIG. 6, FIG. 6 shows a schematic flowchart of how to determine an object search result based on an initial object detection result when the initial object detection result indicates that an initial field-of-view image does not include a target object according to one embodiment of the present disclosure, including steps S601 to S604.

In step S601, a next sub-region to be searched is determined.

In this step, the self-mobile device may determine a next sub-region to be searched from the current scene or the key search region. Illustratively, the self-mobile device may determine a next sub-region to be searched based on a preset sub-region determining strategy. The preset sub-region determining strategy may include: the distance between the central position of the next sub-region to be searched and the initial position being less than a preset distance threshold (a preset distance value, which may be, for example, a value greater than 0 and less than 2r, and may be set based on actual situations, which is not particularly limited in the present disclosure), and the overlapping area between the next sub-region to be searched and the initial searched sub-region being less than a preset area threshold (a preset area value, which may be set based on actual situations, which is not particularly limited in the present disclosure).

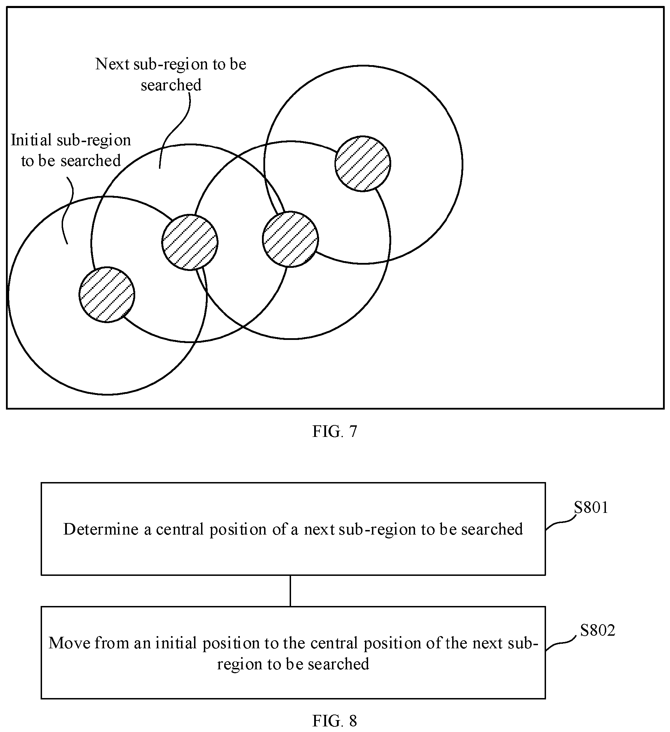

Referring to FIG. 7, FIG. 7 shows a schematic diagram of how to determine a next sub-region to be searched according to one embodiment of the present disclosure. As shown in FIG. 7, the central position of the next sub-region to be searched may be located on the boundary line of the initial searched sub-region, such that the distance between the central position of the next sub-region to be searched and the initial position is r. In addition, there is a partial overlapping area between the next sub-region to be searched and the initial searched sub-region, such that the self-mobile device may capture a field-of-view image corresponding to the next sub-region to be searched by rotating 360 degrees at the central position of the next sub-region to be searched. Similarly, the subsequent specific method for determining the sub-region to be searched after the next one is the same as the method for determining the next sub-region to be searched.

Based on the above strategy, the next sub-region to be searched is determined. According to the present disclosure, the self-mobile device can preferentially search for a region that is closer to the initial position and overlaps less with the searched region, thereby avoiding repeated invalid searches and unnecessary movements. Therefore, in one aspect, the search efficiency is improved; further, it is considered that the time and power of the self-mobile device are limited, such that the power allocation of a sweeper robot can be more reasonably utilized, and the use duration of the robot is prolonged; and further, a certain overlapping area between the next sub-region to be searched and the searched region is ensured, such that the problem of missing search blind spots in the search process can be avoided, and the search integrity can be improved.

After the next sub-region to be searched is determined, referring to FIG. 8, FIG. 8 shows a schematic flowchart of how a self-mobile device moves to a next sub-region to be searched according to one embodiment of the present disclosure, including steps S801 and S802.

In step S801, the central position of the next sub-region to be searched is determined.

In this step, after the next sub-region to be searched is determined, the self-mobile device may determine the central position of the next sub-region to be searched. The central position can ensure that the self-mobile device can subsequently rotate by 360 degrees to capture images covering every corner of the next sub-region to be searched.

In step S802, moving is performed from the initial position to the central position of the next sub-region to be searched.

In this step, after the central position of the next sub-region to be searched is determined, the self-mobile device may move from the initial position to the central position of the next sub-region to be searched.

After the device moves to the central position of the next sub-region to be searched, reference may still be made to FIG. 6. In step S602, a next field-of-view image of the self-mobile device during movement in the next sub-region to be searched is captured by the image capturing device.

In this step, the self-mobile device may rotate by 360 degrees at the central position, and a next field-of-view image of the self-mobile device during rotation in the next sub-region to be searched is captured by the image capturing device. After the next field-of-view image is obtained, the next sub-region to be searched may be marked as a searched sub-region.

In step S603, whether the next field-of-view image includes the target object is detected based on the feature description information to obtain a next object detection result.

In this step, after the next field-of-view image is obtained, the self-mobile device may call the physical object recognition model again, such that the physical object recognition model detects whether the next field-of-view image includes the target object based on the feature description information included in the object search instruction to obtain a next object detection result.

In step S604, the object search result for the target object is determined based on the next object detection result.

In this step, the self-mobile device may determine the object search result for the target object based on the next object detection result. Illustratively, specifically, when the next object detection result indicates that the next field-of-view image includes the target object, a next searched sub-region may be directly marked as an appearance region of the target object in the pre-created scene map, and then the marked appearance region and/or the next initial field-of-view image are output as the object search result for the target object. When the next object detection result indicates that the next field-of-view image does not include the target object, the next sub-region to be searched may be re-determined until the next sub-region to be searched is the last sub-region to be searched in the current scene of the self-mobile device, or when it is detected that the next field-of-view image corresponding to the next sub-region to be searched includes the target object, searching for the target object from the current scene is terminated.

In the case that the next sub-region to be searched is the last sub-region to be searched in the current scene of the self-mobile device, and the last field-of-view image corresponding to the last sub-region to be searched still does not include the target object, it may be determined that a search result for the target object is "not found".

After the object search result for the target object is determined based on the object detection result, the present disclosure may push the object search result to an application and/or a user terminal corresponding to the self-mobile device. Illustratively, the object search result may be displayed on a prompt interface of the application or may be informed to the user by a voice reply, and may be set based on actual situations. This is not particularly limited in the present disclosure.

It should be noted that when the target object is a charging dock, in the case that the object search result includes an appearance region of the charging dock, after the object search result is pushed to the application and/or the user terminal corresponding to the self-mobile device, the self-mobile device may autonomously move to the appearance region corresponding to the charging dock for charging.

It should be further noted that in the case that the target object in the object search instruction includes two or more objects, for example, the object search instruction includes the feature description information of an object A, an object B, and an object C, in one optional embodiment, after obtaining each field-of-view image, the self-mobile device may detect whether the field-of-view image includes the object A, the object B, and the object C. In the case that any specified object (for example, the object A) is included, the position of the specified object may be marked, and the specified object (the object A) may be removed from the to-be-searched object. Then, a next field-of-view image is captured, and whether the field-of-view image includes the object B and the object C is detected; and until the three objects are found or the current scene is completely traversed, the task is ended, and the object search result (which may be a successful result that the three objects are all found, or a failed result that the three objects are all not found, or a result that a part of the objects are found and a part of the objects are not found) is output. In another optional embodiment, after obtaining each field-of-view image, the self-mobile device may first detect whether the field-of-view image includes an object A, and when the object A is found or the current scene is completely traversed, end the task of searching for the object A; then capture a field-of-view image in the current scene, detect whether the field-of-view image includes an object B, and when the object B is found or the current scene is completely traversed, end the task of searching for the object B; and finally, capture a field-of-view image in the current scene, detect whether the field-of-view image includes an object C, and when the object C is found or the current scene is completely traversed, end the task of searching for the object C. The above methods can be set based on actual situations, and this is not particularly limited in the present disclosure.

Based on the above technical solutions, the present disclosure at least has the following technical effects.

Firstly, a target object is searched for in response to an object search instruction, which overcomes the limitation in the related art where only an object with signal transmission capabilities can be identified, expands the type and range of the target object that can be searched for, and enhances the breadth of object search coverage.

Secondly, the field-of-view image in each sub-region to be searched is captured by rotating by 360 degrees at each position, and then a next sub-region to be searched that is closest to the current position and has the smallest overlapping area with the current sub-region to be searched is selected to continue searching for the target object, such that the blind spots in object search can be avoided, and it is ensured that the search region covers all corners of the environment.

Thirdly, the key search region (i.e., the specified search region of the target object or the historical appearance region of the target object) is determined from the current scene, and the target object is preferentially searched for in the key search region, such that the self-mobile device can be assisted in quickly finding the target object, thereby saving the object search time and improving the object search efficiency.

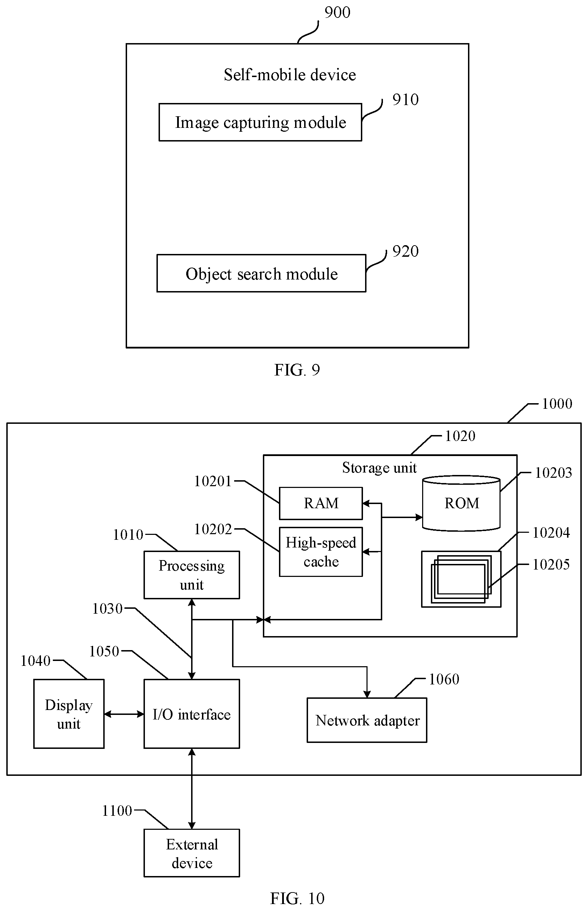

The present disclosure further provides a self-mobile device. The self-mobile device is provided with an image capturing device. FIG. 9 shows a schematic structural diagram of a self-mobile device according to one exemplary embodiment of the present disclosure. As shown in FIG. 9, a self-mobile device 900 may include an image capturing module 910 and an object search module 920. Here,
the image capturing module 910 is configured to capture, by the image capturing device, a field-of-view image of the self-mobile device during movement after an object search instruction is received, the object search instruction including the feature description information of a target object to be searched; and
the object search module 920 is configured to detect whether the field-of-view image includes the target object based on the feature description information to obtain an object detection result, and determine an object search result for the target object based on the object detection result.

In the exemplary embodiments of the present disclosure, after the object search instruction is received, the image capturing module 910 capturing, by the image capturing device, the field-of-view image of the self-mobile device during movement includes:
determining, after the object search instruction is received, an initial sub-region to be searched from a current scene; and
capturing, by the image capturing device, an initial field-of-view image of the self-mobile device during movement in the initial sub-region to be searched.

In the exemplary embodiments of the present disclosure, the image capturing module 910 determining the initial sub-region to be searched from the current scene includes:
determining an initial position of the self-mobile device in the current scene; and
determining a circular region with the initial position as a center of a circle and a preset distance length as a radius as the initial sub-region to be searched.

In the exemplary embodiments of the present disclosure, the image capturing module 910 determining the initial sub-region to be searched from the current scene includes:
determining a key search region from the current scene, a search priority corresponding to the key search region being higher than that of other regions in the current scene, and the search priority being configured to represent a sequence in which the self-mobile device searches for the target object in different regions of the current scene; and
moving from a current position to the key search region, and determining the initial sub-region to be searched in the key search region.

In the exemplary embodiments of the present disclosure, the image capturing module 910 determining the initial sub-region to be searched in the key search region includes:
determining an initial position of the self-mobile device in the key search region; and
determining a circular region with the initial position as a center of a circle and a preset distance length as a radius as the initial sub-region to be searched.

In the exemplary embodiments of the present disclosure, the image capturing module 910 capturing, by the image capturing device, the initial field-of-view image of the self-mobile device during movement in the initial sub-region to be searched includes:
rotating by a preset angle in the initial sub-region to be searched with the initial position as a rotation center; and
capturing, by the image capturing device, an initial field-of-view image of the self-mobile device during rotation in the initial sub-region to be searched.

In the exemplary embodiments of the present disclosure, the image capturing module 910 determining the key search region from the current scene includes:
detecting whether the object search instruction includes a specified search region for the target object; and
determining, in the case that the object search instruction includes the specified search region, the specified search region as the key search region.

In the exemplary embodiments of the present disclosure, the image capturing module 910 is configured to:
retrieving, in the case that the object search instruction does not include the specified search region, a historical search record based on the feature description information to obtain a historical appearance region of the target object; and
determining the historical appearance region as the key search region,
where the historical search record is configured to store a mapping relationship between feature description information of a historical search object and a search result thereof, and the search result includes a historical appearance region of the historical search object.

In the exemplary embodiments of the present disclosure, after moving from the current position to the key search region, the image capturing module 910 is configured to:
controlling a capture frequency of the image capturing device to increase from a first frequency to a second frequency.

In the exemplary embodiments of the present disclosure, after capturing, by the image capturing device, the initial field-of-view image of the self-mobile device during movement in the initial sub-region to be searched, the method further includes:
marking the initial sub-region to be searched as an initial searched sub-region.

In the exemplary embodiments of the present disclosure, the object search module 920 detecting whether the field-of-view image includes the target object based on the feature description information to obtain the object detection result includes:
detecting whether the initial field-of-view image includes the target object based on the feature description information to obtain an initial object detection result.

In the exemplary embodiments of the present disclosure, after the initial object detection result is obtained, the object search module 920 determining the object search result for the target object based on the object detection result includes:
marking, in the case that the initial object detection result indicates that the initial field-of-view image includes the target object, the initial searched sub-region as an appearance region of the target object in a pre-created scene map; and
outputting the marked appearance region and/or the initial field-of-view image as the object search result for the target object.

In the exemplary embodiments of the present disclosure, after the initial searched sub-region is marked as the appearance region of the target object in the pre-created scene map, the object search module 920 is configured to:
recapturing the initial field-of-view image in the initial searched sub-region; and
determining the marked appearance region and/or the recaptured initial field-of-view image as the object search result for the target object.

In the exemplary embodiments of the present disclosure, after the initial object detection result is obtained, the object search module 920 determining the object search result for the target object based on the object detection result includes:
determining, in the case that the initial object detection result indicates that the initial field-of-view image does not include the target object, a next sub-region to be searched;
capturing, by the image capturing device, a next field-of-view image of the self-mobile device during movement in the next sub-region to be searched;
detecting whether the next field-of-view image includes the target object based on the feature description information to obtain a next object detection result; and
determining the object search result for the target object based on the next object detection result.

In the exemplary embodiments of the present disclosure, the object search module 920 determining the next sub-region to be searched includes:
determining the next sub-region to be searched based on a preset sub-region determining strategy,
where the preset sub-region determining strategy includes: a distance between a central position of the next sub-region to be searched and the initial position being less than a preset distance threshold, and an overlapping area between the next sub-region to be searched and the initial searched sub-region being less than a preset area threshold.

In the exemplary embodiments of the present disclosure, after the next sub-region to be searched is determined, the object search module 920 is configured to:
determining a central position of the next sub-region to be searched; and
moving from the initial position to the central position of the next sub-region to be searched.

In the exemplary embodiments of the present disclosure, after the object search result for the target object is determined based on the object detection result, the object search module 920 is configured to:
pushing the object search result to an application and/or a user terminal corresponding to the self-mobile device.

In the exemplary embodiments of the present disclosure, the target object includes a charging dock, and the object search result includes an appearance region of the charging dock; and
after the object search result is pushed to the application and/or the user terminal corresponding to the self-mobile device, the object search module 920 is configured to:
proceeding to the appearance region corresponding to the charging dock for charging.

In the exemplary embodiments of the present disclosure, the object search instruction includes the following forms:
a control instruction issued by an application of the self-mobile device;
a voice control instruction; and
a control signal transmitted by a remote control device of the self-mobile device,
where the remote control device includes a Bluetooth remote control device, an infrared remote control device, and a radio frequency remote control device.

In the exemplary embodiments of the present disclosure, the target object includes one or more objects; and
when the target object includes a plurality of objects, types of any two of the plurality of objects are the same or different.

Specific details of each module in the self-mobile device have been described in detail in the corresponding object search method, and thus will not be repeated here.

It should be noted that although several modules or units of the device for action execution are mentioned in the above detailed description, such division is not mandatory. In practice, according to the embodiments of the present disclosure, the features and functions of two or more modules or units described above may be embodied in one module or unit. Conversely, the features and functions of one module or unit described above may be further divided and embodied by a plurality of modules or units.

In addition, although the steps of the method in the present disclosure are described in a specific order in the drawings, this does not require or imply that these steps are necessarily performed in this specific order, or that all of the steps shown are necessarily performed to achieve the desired results. Additionally or alternatively, some steps may be omitted, a plurality of steps may be combined into one step for execution, and/or one step may be divided into a plurality of steps for execution, among other variations.

Based on the description of the foregoing embodiments, a person skilled in the art can easily understand that the exemplary embodiments described herein may be implemented by software, or may be implemented by software in combination with necessary hardware. Therefore, the technical solutions according to the embodiments of the present disclosure may be embodied in the form of a software product. The software product may be stored in a non-volatile storage medium (which may be a CD-ROM, a USB flash drive, a mobile hard disk, or the like) or on a network, and includes several instructions that enable a computing device (which may be a personal computer, a server, a mobile terminal, a network device, or the like) to perform the method according to the embodiments of the present disclosure.

The present disclosure further provides a computer-readable storage medium. The computer-readable storage medium may be included in the electronic device described in the foregoing embodiments, or may exist alone without being assembled into the electronic device.

The computer-readable storage medium may be, for example, but is not limited to, an electrical, magnetic, optical, electromagnetic, infrared, or semiconductor system, apparatus, or device, or any combination thereof. More specific examples of the computer-readable storage medium may include but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium is any tangible medium containing or storing a program for use by or in conjunction with an instruction execution system, apparatus, or device.

The computer-readable storage medium may send, propagate, or transmit a program used by or in conjunction with an instruction execution system, apparatus, or device. Program codes contained on the computer-readable storage medium are transmitted using any suitable medium, including but not limited to: wireless, wired, optical cables, RF, or any suitable combination thereof.

The computer-readable storage medium carries one or more programs, and the above one or more programs, when executed by the electronic device, cause the electronic device to implement the method described in the foregoing embodiments.

In addition, an embodiment of the present disclosure further provides an electronic device capable of implementing the above method.

Those skilled in the art can understand that various aspects of the present disclosure can be implemented as systems, methods, or program products. Therefore, various aspects of the present disclosure may be specifically implemented in the form of a complete hardware embodiment, a complete software embodiment (including firmware, microcode, etc.), or an embodiment combining hardware and software, which may be collectively referred to as a "circuit", "module" or "system" herein.

An electronic device 1,000 according to such an embodiment of the present disclosure is described below with reference to FIG. 10. The electronic device 1000 shown in FIG. 10 is only an example, and should not bring any limitation to the functions and the use scope of the embodiments of the present disclosure.

As shown in FIG. 10, the electronic device 1000 is present in a form of a general-purpose computing device. Components of the electronic device 1,000 may include, but are not limited to, at least one above processing unit 1,010, at least one above storage unit 1,020, a bus 1,030 connecting different system components (including the storage unit 1,020 and the processing unit 1,010), and a display unit 1,040.

The storage unit stores program codes, and the program codes may be executed by the processing unit 1,010, such that the processing unit 1,010 performs the steps according to various exemplary embodiments of the present disclosure described in the above "exemplary methods" section of the specification. For example, the processing unit 1,010 can perform steps as shown in FIG. 1. In step S110, after an object search instruction is received, a field-of-view image of a self-mobile device during movement is captured by an image capturing device. The object search instruction includes the feature description information of a target object to be searched. In step S120, whether the field-of-view image includes the target object is detected based on the feature description information to obtain an object detection result, and an object search result for the target object is determined based on the object detection result.

The storage unit 1020 may include a readable medium in a form of a volatile storage unit, for example, a random access memory (RAM) 10201 and/or a high-speed cache memory 10202, and may further include a read-only memory (ROM) 10203.

The storage unit 1020 may further include a program/utility 10204 having a set (at least one) of program modules 10205, such program modules 10205 including, but not limited to: an operating system, one or more application programs, other program modules and program data, each of which or some combinations thereof may include an embodiment of a network environment.

The bus 1030 may represent one or more of several types of bus structures, including a storage unit bus or a storage unit controller, a peripheral bus, a graphics acceleration port, a processing unit, or a local bus using any of a plurality of bus structures.

The electronic device 1000 may also communicate with one or more external devices 1100 (such as a keyboard, a pointing device, a Bluetooth device, etc.), and may also communicate with one or more devices that enable a user to interact with the electronic device 1000, and/or communicate with any device (such as a router, a modem, etc.) that enables the electronic device 1000 to communicate with one or more other computing devices. Such communication may be implemented through an input/output (I/O) interface 1050. In addition, the electronic device 1000 may also communicate with one or more networks (such as a local area network (LAN), a wide area network (WAN), and/or a public network, such as the Internet) via a network adapter 1060. As shown in the figure, the network adapter 1060 communicates with other modules of the electronic device 1000 via the bus 1030. It should be understood that although not shown in the figures, other hardware and/or software modules may be used in conjunction with the electronic device 1000, including, but not limited to: microcode, device drivers, redundant processing units, external disk drive arrays, RAID systems, tape drivers, data backup storage systems, and the like.

Other embodiments of the present disclosure are apparent to those skilled in the art from consideration of the specification and practice of the present disclosure disclosed herein. The present disclosure is intended to encompass any variation, use, or adaptation of the present disclosure following the general principles of the present disclosure and including known common knowledge or customary technical means in the art undisclosed in the present disclosure. The specification and embodiments are only considered exemplary, and the true scope and spirit of the present disclosure are indicated in the claims.

## Claims

1. An object search method, applicable to a self-mobile device, the self-mobile device being provided with an image capturing device, and the method comprising:
capturing, by the image capturing device, a field-of-view image of the self-mobile device during movement after an object search instruction is received, the object search instruction comprising feature description information of a target object to be searched; and
detecting whether the field-of-view image comprises the target object based on the feature description information to obtain an object detection result, and determining an object search result for the target object based on the object detection result.

2. The method according to claim 1, wherein capturing, by the image capturing device, the field-of-view image of the self-mobile device during movement after the object search instruction is received comprises:
determining, after the object search instruction is received, an initial sub-region to be searched from a current scene; and
capturing, by the image capturing device, an initial field-of-view image of the self-mobile device during movement in the initial sub-region to be searched.

3. The method according to claim 2, wherein determining the initial sub-region to be searched from the current scene comprises:
determining an initial position of the self-mobile device in the current scene; and
determining a circular region with the initial position as a center of a circle and a preset distance length as a radius as the initial sub-region to be searched.

4. The method according to claim 2, wherein determining the initial sub-region to be searched from the current scene comprises:
determining a key search region from the current scene, a search priority corresponding to the key search region being higher than that of other regions in the current scene, and the search priority being configured to represent a sequence in which the self-mobile device searches for the target object in different regions of the current scene; and
moving from a current position to the key search region, and determining the initial sub-region to be searched in the key search region.

5. The method according to claim 4, wherein determining the initial sub-region to be searched in the key search region comprises:
determining an initial position of the self-mobile device in the key search region; and
determining a circular region with the initial position as a center of a circle and a preset distance length as a radius as the initial sub-region to be searched.

6. The method according to any one of claims 2 to 5, wherein capturing, by the image capturing device, the initial field-of-view image of the self-mobile device during movement in the initial sub-region to be searched comprises:
rotating by a preset angle in the initial sub-region to be searched with the initial position as a rotation center; and
capturing, by the image capturing device, an initial field-of-view image of the self-mobile device during rotation in the initial sub-region to be searched.

7. The method according to claim 4 or 5, wherein determining the key search region from the current scene comprises:
detecting whether the object search instruction comprises a specified search region for the target object; and
determining, in the case that the object search instruction comprises the specified search region, the specified search region as the key search region.

8. A self-mobile device, the self-mobile device being provided with an image capturing device, and the self-mobile device comprising:
an image capturing module, configured to capture, by the image capturing device, a field-of-view image of the self-mobile device during movement after an object search instruction is received, the object search instruction comprising feature description information of a target object to be searched; and
an object search module, configured to detect whether the field-of-view image comprises the target object based on the feature description information to obtain an object detection result, and determine an object search result for the target object based on the object detection result.

9. A computer storage medium having a computer program stored thereon, the computer program, when run by a processor, causing the processor to perform the object search method according to any one of claims 1 to 7.

10. An electronic device, comprising:
a processor; and
a memory, configured to store executable instructions of the processor;
wherein the processor is configured to perform the object search method according to any one of claims 1 to 7 by executing the executable instructions.
